(19) **Europäisches Patentamt**

**European Patent Office**

**Office européen des brevets**

(11) **EP 0 628 813 B1**

(12) **FASCICULE DE BREVET EUROPEEN**

(45) Date de publication et mention
de la délivrance du brevet:
**30.08.2000 Bulletin 2000/35**

(51) Int. Cl.[7]: **G01N 30/32**, B01D 15/08

(21) Numéro de dépôt: **94401274.9**

(22) Date de dépôt: **08.06.1994**

(54) **Instrument de chromatographie liquide haute performance muni d'un dispositif de contrôle et procédé de contrôle du fonctionnement d'un tel instrument**

Hochleistungsflüssigkeitschromatographiegerät mit Kontrollvorrichtung und Verfahren zur Kontrolle des Betriebs dieses Chromatographiegerätes

High performance liquid chromatography instrument with a controlling device and process for controlling its functioning

(84) Etats contractants désignés:
**BE DE FR GB NL**

(30) Priorité: **08.06.1993 FR 9306825**

(43) Date de publication de la demande:
**14.12.1994 Bulletin 1994/50**

(73) Titulaire:
**I & T INFORMATIQUE ET TECHNOLOGIES
F-93150 Le Blanc-Mesnil (FR)**

(72) Inventeurs:
• **Njamfa, Serge
F-95240 Cormeilles-en-Parisis (FR)**
• **Joron, Laurent
F-60700 Pontpoint (FR)**

(74) Mandataire: **Warcoin, Jacques
Cabinet Régimbeau,
26, avenue Kléber
75116 Paris (FR)**

(56) Documents cités:
**EP-A- 0 168 939**     **DE-A- 2 830 601**
**US-A- 4 137 011**     **US-A- 4 422 942**
**US-A- 4 629 561**

• **PATENT ABSTRACTS OF JAPAN vol. 111, no. 86 (P-586) & JP-A-62 014 059 (KOKEN)**
• **PATENT ABSTRACTS OF JAPAN vol. 123, no. 50 (P-760) & JP-A-63 106 554 (TOKYO RIKA KIKAY)**

## Description

La présente invention concerne un instrument de chromatographie liquide haute performance muni d'un dispositif de contrôle et un procédé de contrôle du fonctionnement de certains des éléments constitutifs dudit instrument, notamment la pompe de solvant, le détecteur et éventuellement l'injecteur, le four thermostaté dans lequel est logée la colonne de chromatographie et le système d'enregistrement des données. Elle concerne enfin les éléments constitutifs du dispositif de contrôle destinés notamment à mettre en oeuvre le procédé de contrôle.

D'une manière générale, les instruments de chromatographie liquide haute performance sont utilisés dans les laboratoires de recherche ou de contrôle. L'intérêt majeur de la chromatographie liquide est de permettre de séparer une grande variété de composés chimiques ou biologiques en mettant en jeu des mécanismes de séparation simple. Il s'agit d'une technique de caractérisation et de quantification de plus en plus utilisée. De ce fait, de nombreux laboratoires industriels font appel à cette technique pour analyser des échantillons de produit.

Par ailleurs, l'importance économique et légale des analyses a conduit les autorités administratives à établir des procédures pour évaluer et garantir la qualité des analyses de ces laboratoires, par l'établissement de règles appelées communément "bonnes pratiques de laboratoires" ou en abrégé BPL.

Aussi, la normalisation des conditions minimales requises pour garantir le bon fonctionnement des instruments de chromatographie, ainsi que la mise en place de systèmes d'accréditation sont devenus une nécessité pour la quasi totalité des laboratoires concernés.

A titre d'exemple, dans l'industrie pharmaceutique, tout médicament subit une série de tests de contrôle de qualité avant sa mise sur le marché. Si l'analyse de ce composé est réalisée par chromatographie liquide haute performance (en abrégé CLHP), il pourra être nécessaire pour le laboratoire de conserver et de pouvoir justifier à tous moments des conditions opératoires utilisées pour l'analyse (débit de pompe, température, détecteur...).

L'objet de l'invention est de permettre de contrôler certains des modules de la chaîne de mesure et d'accréditer ses spécifications techniques d'origine ou leurs paramètres d'utilisation dans les conditions réelles en vue de la validation des méthodes d'analyses.

Un autre objet de l'invention est de proposer un procédé de contrôle, pouvant être étalonné par les autorités administratives compétentes, compatible avec tous les instruments CLHP et de permettre de ce fait la fourniture d'une certification de ces valeurs.

L'invention concerne, en premier lieu, un instrument de chromatographie liquide haute performance muni d'un dispositif de contrôle, ledit instrument étant constitué des moyens suivants reliés en série : une pompe à solvant, un injecteur d'èchantillons à analyser, une colonne de chromatographie disposée éventuellement dans un four thermostaté, une cuve de mesure, un détecteur du ou des composés à identifier et un système d'enregistrement de données, caractérisé en ce que ledit dispositif de contrôle comporte :

- un module de contrôle du débit de la pompe relié d'une part à un injecteur et d'autre part au détecteur,
- un module de contrôle de la pression de la pompe relié à la pompe par l'intermédiaire d'un capteur de pression,
- lesdits modules de contrôle étant reliés à l'injecteur par l'intermédiaire d'un sélecteur de voies.

De plus, lorsque ledit détecteur est constitué d'un monochromateur et d'une cellule opto-électronique, ledit dispositif de contrôle comporte un détecteur de contrôle relié, à la sortie du monochromateur à tester, par un moyen d'acheminement de l'onde électromagnétique.

Elle a également pour objet un procédé pour contrôler le fonctionnement d'un instrument, notamment de la pompe de solvant et du détecteur, caractérisé en ce que, a, l'on injecte vers un circuit, de volume $V_1$, du module de contrôle du débit de la pompe, un composé étalon, et l'on mesure le temps $t_1$ jusqu'à la détection puis on injecte vers le circuit, de volume $V_2$, du module de contrôle du débit de la pompe le même composé étalon et l'on mesure le temps $t_2$ jusqu'à la détection et l'on calcule le débit de la pompe, en ce que dans une seconde étape **b**, on dirige, vers un circuit restricteur de pression du module de contrôle de la pression le flux de la pompe et l'on mesure la pression au capteur, puis on modifie le débit et l'on mesure à nouveau la pression au capteur, éventuellement après la première mesure, on dirige successivement le flux de la pompe vers un ou plusieurs autres restricteurs de pression de capacité différente et l'on mesure à nouveau la pression au capteur, et en ce que dans une troisième étape, **c**, on vérifie le détecteur par injection d'une solution déterminée ou lorsque le détecteur à tester comporte un monochromateur, on fixe le monochromateur de contrôle à la longueur d'onde donnée, on dirige l'onde électromagnétique vers ledit monochromateur de contrôle et l'on vérifie la réponse de la cellule optoélectronique, lesdites étapes **a**, **b**, et **c**, pouvant être interverties et/ou les étapes **a** et **b** pouvant être effectuées simultanément et les données acquises par les différentes mesures éventuellement traitées par une unité informatique.

L'invention concerne enfin les moyens de contrôle destinés à mettre en oeuvre le procédé de contrôle et à être utilisés dans un instrument de chromatographie liquide haute performance.

Par moyens de contrôle, on entend les modules de contrôle de la pompe, le détecteur de contrôle, éventuellement les modules de contrôle de la température du four, du système d'enregistrement de données, de l'injecteur.

L'invention a enfin pour objet un détecteur de contrôle d'un monochromateur constitué d'un monochromateur de contrôle relié, à son entrée, à la sortie du monochromateur à tester, par l'intermédiaire d'un adaptateur et d'une fibre optique et à sa sortie à une cellule optoélectronique.

Le fonctionnement d'un instrument CLHP s'effectue de façon connue de la manière suivante :

La pompe prélève le solvant dans un ballon et le pousse dans le circuit à un débit choisi. L'injecteur permet d'introduire un volume donné de chaque échantillon à analyser dans le circuit. Le solvant poussé par la pompe amène l'échantillon jusqu'à la colonne d'analyse, éventuellement thermostatée à une température fixée par un four à colonne. Les différents composants de l'échantillon sont séparés par la colonne remplie d'un support approprié. A la sortie de la colonne les composés, les uns après les autres, sont dirigés par le solvant vers le détecteur en passant dans une cuve de mesure. La présence et la quantité de chaque composé est analysée par le détecteur dont la cellule opto-électronique fournira un signal électrique proportionnel à la quantité détectée par celle-ci. Cette variation de signal dans le temps est éventuellement récupérée par un moyen informatique d'acquisition et de traitement de données.

En résumé, l'instrument de mesure présente le schéma suivant :

solvant - pompe - injecteur - colonne (four) - détecteur - système d'enregistrement de données.

Les moyens permettant de diriger le flux liquide vers les modules de contrôle sont de façon connue des vannes de distribution multivoies. En général, l'injecteur du module de contrôle est celui du chromatographe.

Selon une variante avantageuse de l'invention, le module de contrôle du débit de la pompe est constitué d'au moins deux circuits en parallèle, reliés en amont par l'intermédiaire d'un sélecteur de voies et interconnectés en aval, lesdits circuits présentant des volumes différents. En général, on choisira des circuits dont les volumes sont des multiples les uns des autres. Par exemple, si le premier circuit a un volume $V_1$, le second circuit aura un volume $2V_1$ et le troisième circuit $4V_1$, etc...

De façon préférée, le module de contrôle du débit comportera deux circuits de volume $V_1$ et $2V_1$.

A partir de l'injecteur, deux injections sont réalisées. Le temps mis à chaque fois par le composé pour être détecté permettra de calculer le débit par la formule :

$$\text{Débit} = (V_2 - V_1 / t_2 - t_1)$$

Selon une autre variante avantageuse, le module de contrôle de la pression de la pompe est constitué d'au moins un restricteur de pression. Toutefois, il est préférable afin de déterminer avec plus de précision la pression de la pompe que le module de contrôle soit constitué d'au moins deux restricteurs de pression, en parallèle, de capacité différente reliés en amont par l'intermédiaire d'un sélecteur de voies et interconnectés en aval.

De façon connue, un monochromateur est un dispositif qui permet d'extraire d'un rayonnement polychromatique un faisceau ne comportant que des radiations électromagnétiques comprises dans un intervalle étroit de longueur d'ondes. Ce système constitue la base des détecteurs à rayonnements électromagnétiques (ultraviolets, visibles, fluorescence) utilisés pour l'analyse de composés chimiques. L'onde électromagnétique émise par le monochromateur traverse le flux liquide, passant dans la cuve de mesure, qui est supposé transporter le composé à détecter et qui absorbe l'onde électromagnétique qui a été définie. La cellule opto-électronique renvoie un signal électrique proportionnel à l'absorption du composé.

Le moyen d'acheminement permettant de récupérer l'onde électromagnétique émise par le monochromateur à tester est de préférence une fibre optique placée de façon réversible devant la sortie dudit monochromateur et maintenue en place par un adaptateur spécifique du monochromateur à tester, utilisé avec ou sans cuve. L'onde traverse le monochromateur de contrôle qui a été calibré à une longueur d'onde définie et, qui n'est transparent à l'onde provenant du monochromateur à tester que si celle-ci correspond à la longueur d'onde à laquelle le monochromateur de contrôle a été réglé par balayage. Dans ce cas, celle-ci excite une cellule photo-électrique placée à la sortie du monochromateur de contrôle. Lors du balayage du monochromateur de contrôle, le signal électrique recueilli présente un maximum qui correspond à la longueur d'onde exacte du monochromateur à tester.

Eventuellement, l'instrument CLHP comporte également des modules de contrôle de la température du four et/ou un module de contrôle de l'injecteur et/ou un module de contrôle du système d'enregistrement de données.

Chaque module de contrôle est de préférence relié à un moyen informatique d'acquisition et de traitement des données qui enregistre, après calcul, les données de mesure.

Le signal de sortie du détecteur est un signal analogique qui doit être numérisé pour être stocké sur informatique. La conversion de ce signal fait appel à un convertisseur analogique/numérique qui découpe le signal par palier pour le numériser (méthode tension/fréquence).

Pour bien fonctionner un convertisseur doit posséder une bonne résolution et être capable de prendre un nombre important de points par seconde.

L'acquisition de données est contrôlée par un boîtier électronique qui génère une série de chromatogrammes calibrés, éventuellement par un organisme officiel, en différents temps et de différents niveaux. Ce boîtier se substitue, dans un premier temps, au détecteur et simule le signal normalement envoyé au système d'enregistrement de données. Ces signaux calibrés sont comparés à ceux indiqués par le système d'enregistrement de données. Pour les systèmes d'acquisition de données reliés numériquement au détecteur (liaison IEEE, RS, 232), une série de volumes calibrés (au moins trois) seront injectés et les surfaces seront mesurées pour évaluer la linéarité de tels systèmes.

Par le procédé, qui va être décrit plus en détail ci-après, il sera ainsi possible de contrôler par ce moyen informatique les différents composants de l'instrument CLHP.

L'invention va maintenant être décrite en liaison avec les figures 1 à 7, annexées, qui sont relatives à des variantes particulières de l'instrument de chromatographie liquide haute performance selon l'invention et à deux adaptateurs spécifiques des monochromateurs à tester.

- La figure 1 est une vue schématique de la chaîne de mesure CLHP constituant l'instrument selon l'invention.
- La figure 2 est une vue schématique d'un module de contrôle du débit et de pression de la pompe.
- La figure 3 est une vue schématique d'un autre module de contrôle du débit et de la pression de la pompe.
- La figure 4 est une vue schématique du monochromateur à tester et du monochromateur de contrôle.
- La figure 5 est une vue en coupe transversale d'un adaptateur circulaire.
- La figure 6 est une vue en coupe longitudinale de l'adaptateur circulaire de la figure 5.
- La figure 7 est une vue en coupe transversale d'un adaptateur spécifique d'un autre monochromateur à tester.

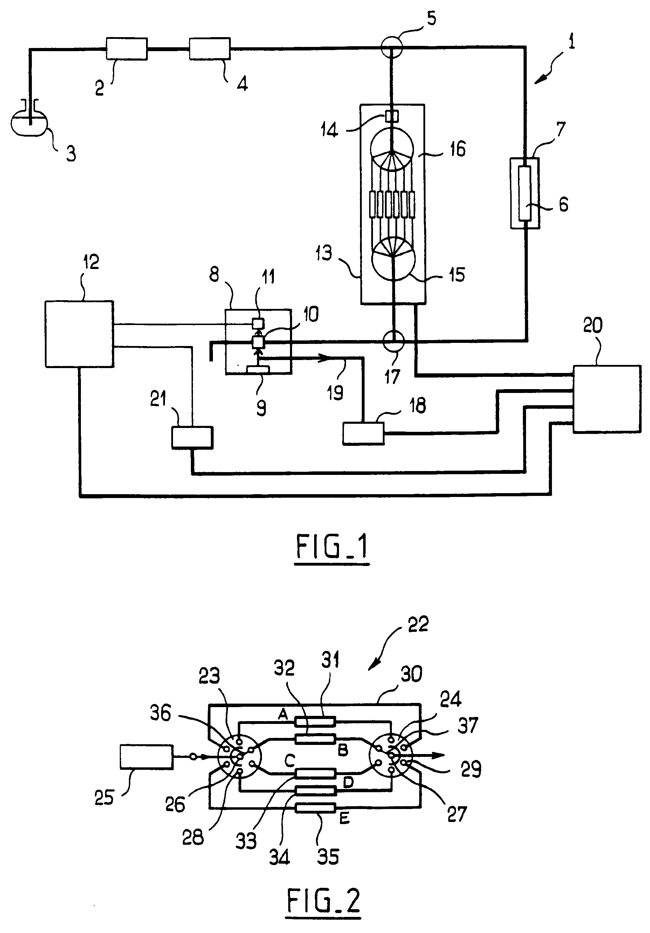

Selon la figure 1, l'instrument CLHP 1 comporte une pompe 2, reliée à un réservoir de solvant 3. Un injecteur de composés 4 est relié au circuit de sortie de la pompe permettant d'introduire dans le circuit les échantillons à analyser. Une vanne de distribution 5 permet de diriger le fluide, soit vers le circuit CLHP, comportant en série une colonne 6, logée dans un four thermostaté 7, puis un détecteur 8 formé d'un monochromateur 9 séparé de la cellule opto-électronique 11 par le circuit traversant une cuve de mesure 10; soit vers le module de contrôle débit/pression 13. La cellule opto-électronique est reliée à un système d'enregistrement de données 12.

Le module de contrôle du débit et de la pression de la pompe 13 qui est détaillée à la figure 2 décrite ci-après comporte un capteur de pression 14 et deux vannes de sélection six voies 15 et 16 reliées par six boucles.

Ce module est relié d'une part à la sortie de l'injecteur 4 par la vanne 5 et d'autre part, au détecteur 8 par l'intermédiaire de la vanne 17. Il est également relié électroniquement à la station informatique 20.

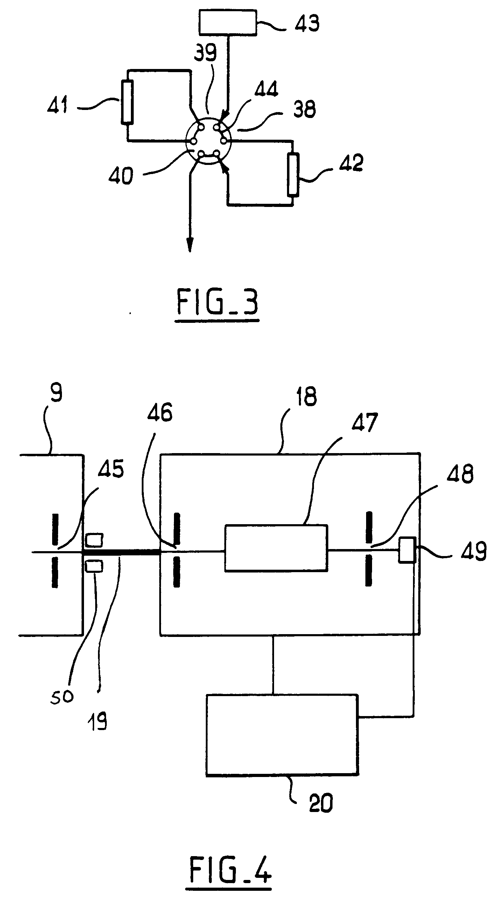

Le détecteur de contrôle 18 décrit plus en détail à la figure 4, est relié à sa sortie, à la sortie du monochromateur à tester 9, à l'aide d'un adaptateur 50, par l'intermédiaire d'une fibre optique 19 et à la station informatique 20. Un boîtier électronique 21 permettant de contrôler le système d'enregistrement de données relie électroniquement le système 12 à la station 20 en plus du fait que le système 12 soit directement relié à la station 20.

Le module de contrôle 22 de la figure 2 est constitué de deux vannes 23, 24, l'une 23 reliée au capteur étalon 25 (lui-même relié à la vanne 5), l'autre 24 au circuit du chromatographe en amont du détecteur, par un sélecteur 2/3 voies 17 (non figuré), par l'intermédiaire d'un orifice central respectivement 26 et 27. Les deux vannes comportent chacune six orifices périphériques respectivement 28 et 29 disposés régulièrement sur une circonférence dont le centre est l'orifice central. Par une face de la vanne, chaque orifice périphérique 28 est relié à un orifice correspondant 29 de l'autre vanne par une boucle creuse permettant le passage du fluide.

Les boucles au nombre de six sont en premier lieu une boucle 30 de dérivation puis deux boucles 31, 32 de volume $V_1$ et $V_2$ pour mesurer le débit et enfin trois boucles 33, 34, 35 comportant chacune un restricteur de pression. Ces orifices périphériques de chaque vanne sont reliés d'une part au capteur-étalon, d'autre part au sélecteur 2/3 voies 17 par deux sélecteurs 36, 37 synchronisés pivotant et fixés à l'orifice central respectif.

Selon la figure 3, le module de contrôle comprend une vanne 39 pourvue de six orifices 40 périphériques disposés régulièrement sur une circonférence.

Deux paires d'orifices adjacents situées symétriquement par rapport à la ligne passant par les deux orifices restant sont reliées chacune par l'intermédiaire d'une boucle 41, 42 respectivement de volume $V_1$ et $V_2$ tandis que les deux orifices restant, diamétralement opposés, sont reliés d'une part au détecteur et d'autre part au capteur-étalon 43 comme dans le module de la figure 2. Un sélecteur de voie à trois branches 44 situées sur la même circonférence que les orifices et pivotant permet de sélectionner le circuit de volume $V_1$ ou le circuit de volume $V_2$.

Selon la figure 4, la fente de sortie 45 du monochromateur à tester 9 est reliée à un monochromateur de contrôle 18 par un adaptateur 50 et une fibre optique 19 qui conduit l'onde électromagnétique à la fente d'entrée 46, puis à un montage de miroirs associés à un réseau actionné par un moteur pas à pas 47 (montage de Czerny-Turner) et enfin à une fente de sortie 48 qui amène l'onde électromagnétique à une cellule optoélectronique 49 reliée à la station informatique 20 qui pilote le réseau.

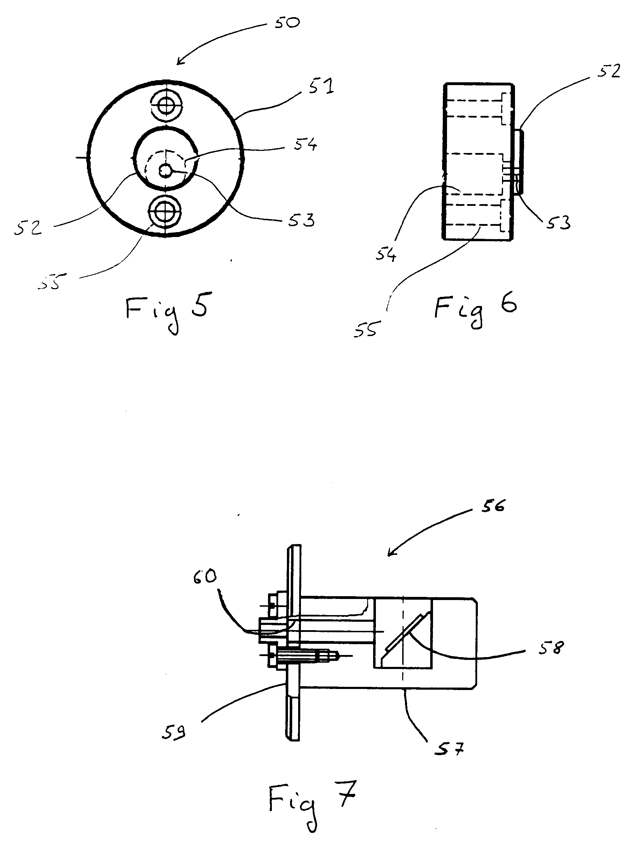

Selon une variante, l'adaptateur 50 selon les figures 5 et 6 est constitué d'un boîtier 51 pourvu d'un épaulement circulaire 52 permettant la fixation sur le monochromateur et d'un orifice 53 dans lequel est logé un embout 54 permettant l'introduction de la fibre optique 19. Deux orifices 55 diamétralement opposés permettent par des écrous appropriés l'immobilisation dudit adaptateur.

Selon une autre variante, l'adaptateur 56 de la figure 7 est constitué d'un boîtier 57 contenant un miroir 58 incliné à 45°, ledit boîtier étant fermé par une plaque 59 pourvue d'un orifice 60 dans lequel est fixée la fibre optique.

Selon un procédé selon l'invention, le contrôle du fonctionnement du système d'enregistrement de données par informatique peut s'effectuer de la façon suivante:

Le module de contrôle génère :

a) une série de pics égaux en hauteur, les surfaces de pic, hauteur de pic et temps au sommet du pic, étant calibrés, pour évaluer la répétabilité,
b) une gamme étalon de pics de hauteur variable progressivement dans le temps pour évaluer la linéarité du convertisseur analogique/numérique. Pour les systèmes d'acquisition de données reliés numériquement au détecteur (liaison IEEE, RS, 232), une série de volumes calibrés (au moins trois) seront injectés et les surfaces seront mesurées pour évaluer la linéarité de tels systèmes.

Pour un débit de la pompe fixé, à partir de l'injecteur on introduit un composé étalon et l'on mesure, pour l'un des volumes du module de contrôle du débit de la pompe, le temps de parcours du composé. Puis l'on répète la même opération en choisissant le second volume du module de contrôle. Des injections, répétées dans le temps, permettent d'apprécier la régularité et l'exactitude du débit.

On répète la même opération en dirigeant, au moyen de la vanne de distribution appropriée, le flux de liquide comportant l'étalon vers le module de contrôle de pression de la pompe.

Les pressions mesurées au capteur seront comparées aux pressions affichées par la pompe testée pour vérifier l'exactitude et la stabilité.

Le contrôle du détecteur s'effectue dans le cas général par la sélection d'une des boucles du module de contrôle (boucle de dérivation éventuellement), puis en injectant des solutions étalons dans le circuit, en une gamme de dilutions calibrées. La réponse du détecteur en signal est mesurée pour chaque dilution et la comparaison de la droite théorique attendue des solutions étalons à la droite de réponse du détecteur permet d'évaluer la linéarité de ce dernier.

Dans le cas où le détecteur est constitué d'un monochromateur, un contrôle complémentaire s'effectue par le monochromateur de contrôle selon le schéma de la figure 4 notamment.

Par des moyens appropriés, le procédé peut éventuellement permettre de contrôler la température du four par une sonde et/ou l'injecteur et/ou le système d'enregistrement des données.

## Revendications

1. Instrument de chromatographie liquide haute performance muni d'un dispositif de contrôle, ledit instrument étant constitué des moyens suivants, reliés cri série : une pompe à solvant (2), un injecteur d'échantillons à analyser ( 4), une colonne de chromatographie (6) disposée, éventuellement, dans un four (7) thermostaté, une cuve de mesure, un détecteur du ou des composés à identifier (8), un système d'enregistrement de données (12) caractérisé en ce que ledit dispositif de contrôle comporte :

   - un module de contrôle (13) du débit de la pompe (2), relié d'une part à un injecteur (4) et, d'autre part au détecteur (8).
   - un module de contrôle (13) de la pression de la pompe, relié à la pompe par l'intermédiaire d'un capteur de pression,
   - lesdits modules (13) de contrôle étant reliés à l'injecteur (4) par l'intermédiaire d'un sélecteur de voies (5).

2. Instrument selon la revendication 1, caractérisé en ce que le module de contrôle (13) du débit de la pompe (2) est constitué d'au moins deux circuits en parallèle (31,32), reliés en amont par l'intermédiaire d'un sélecteur de voies (36) et interconnectés (37) en aval, lesdits circuits présentant des volumes différents.

3. Instrument selon la revendication 1, caractérisé en ce que le module dc contrôle (13) de la pression de la pompe (2) est constitué d'au moins un restricteur de pression (33).

4. Instrument selon la revendication 3, caractérisé en ce que le module de contrôle (13) la pression de la pompe (2) est constitué d'au moins deux restricteurs de pression (33,34,35) en parallèle de capacité différente, reliés en amont par l'intermédiaire d'un sélecteur de voies (36) et interconnectés (37) en aval.

5. Instrument selon l'une des revendications 1 à 4, caractérisé en ce que le module (13) de contrôle du débit et dc la pression de la pompe (2) est constitué de deux ou plusieurs circuits, en parallèle, pour contrôler le débit, interconnectés en aval et de deux ou plusieurs circuits, en parallèle, pour contrôler la pression de la pompé (2), lesdits circuits étant reliés en amont, par l'intermédiaire d'un capteur de pression et d'un sélecteur de voies (36), a l'injecteur (4).

6. Instrument selon la revendication 1, caractérisé en ce que ledit détecteur est constitué d'un monochromateur (9) et d'une cellule optoélectronique (11), ledit dispositif de contrôle comportant un détecteur de contrôle (18), relié à la sortie du monochromateur (9) à tester par un moyen d'acheminenent de l'onde électromagnétique.

7. Instrument selon la revendication 6, comportant un monochromateur (9), une cuve de mesure (10) et une cellule optoélectronique (11), caractérisé en ce qu'il comporte un détecteur de contrôle (18) constitué d'un monochromateur de contrôle (47) et d'une cellule optoélectronique (49), le monochromateur de contrôle (47) étant relié à la sortie du monochromateur (9) tester par un moyen d'acheminement de l'onde électromagnétique.

8. Instrument selon la revendication 7, caractérisé en ce que le moyen d'acheminement de l'onde électromagnétique est une fibre optique reliée au monochromateur (9) tester par un adaptateur.

9. Instrument selon l'une des revendication 1 à 8, caractérisé en ce que le dispositif de contrôle comprend un module de contrôle de la température du four (7) et/ou un module de contrôle de l'injecteur (4) et/ou un module de contrôle du système d'enregistrement de données.

10. Instrument selon l'une des revendications 1 à 9, caractérisé en ce que le module de contrôle (13) du débit de la pompe (2), le module de contrôle (13) de la pression de la pompe, le détecteur (8) éventuellement le module contrôle de la température du four (7), et le module de contrôle de l'injecteur (4) et le module de contrôle du système d'enregistrement des données sont reliés à un moyen informatique d'acquisition et de traitement des données.

11. Procédé pour contrôler le fonctionnement d'un instrument, notamment la pompe (9) de solvant, selon l'une des revendications 1 à 10, caractérisé en ce que (a) l'on injecte vers un circuit de volume V1 du module de contrôle (13) du débit de la pompe (2) un composé étalon et que l'on mesure le temps t1 jusqu'à la détection, puis on injecte, vers le circuit de volume V2 du module de contrôle du débit de la pompe, le même composé étalon et l'on mesure le temps t2 jusqu'à la détection et l'on calcule le débit de la pompe (2), et en ce que dans une seconde étape (b), on dirige, vers un circuit restricteur de pression du module de contrôle de la pression le flux de la pompe (2) et l'on mesure la pression au capteur, puis on modifie le débit et l'on mesure à nouveau la pression au capteur, ou, éventuellement, après la première mesure on dirige successivement le flux de la pompe (2), vers un ou plusieurs autres restricteurs de pression de capacité différente et l'on mesure à nouveau la pression au capteur, et en ce que dans une troisième étape (c), lorsque le détecteur (8) comporte un monochromateur (9) on fixe le monochromateur (9) à tester à une longueur d'onde donnée, on dirige l'onde électromagnétique vers ledit monochromateur (9) de contrôle et éventuellement par balayage, l'on vérifie la réponse de la cellule opto-électronique, lesdites étapes (a), (b), (c) pouvant être interverties et/ou les étapes (a) et (b) pouvant être effectuées simultanément et les données acquises par les différentes mesures éventuellement traitées par une unité informatique.

12. Procédé selon la revendication 11, caractérisé en ce que l'on mesure la température du four (7) et/ou l'on contrôle l'injecteur (4) et/ou l'on contrôle le système d'enregistrement de données.

13. Moyens de contrôle de la pompe, du détecteur éventuellement de la température du four (7) du système d'enregistrement de données, de l'injecteur tels que décrits aux revendications 1 à 10, destinés à être utilisés pour mettre en oeuvre le procédé selon l'une des revendications 11 ou 12 ou à être utilisés dans un instrument de chromatographie liquide haute performance selon l'une des revendications 1 à 10.

14. Détecteur de contrôle d'un monochromateur constitué d'un monochromateur de contrôle relié, à son entrée, à la sortie du monochromateur à tester, par l'intermédiaire d'une fibre optique et d'un adaptateur et à sa sortie à une cellule optoélectronique.

**Claims**

1. A high performance liquid chromatography instrument having a monitoring device, said instrument being constituted by the following means connected in series: a solvent pump (2); an injector (4) for injecting samples to be analyzed; a chromatography column (6) optionally located in a thermostated oven (7); a measurement vessel; a detector (8) of the compound(s) to be identified; and a data recording system (12), the instrument being characterized in that said monitoring device comprises:

- a module (13) for monitoring the flow rate of the pump (2), connected firstly to the injector (4) and secondly to the detector (8); and

- a module (13) for monitoring the pressure of the pump, connected to the pump via a pressure sensor;

- said monitoring modules (13) being connected to the injector (4) via a port selector (5).

2. An instrument according to claim 1, characterized in that the module (13) for monitoring the flow rate of the pump (2) is constituted by at least two parallel circuits (31, 32) connected upstream via a port selector (36) and interconnected downstream (37) said circuits having different volumes.

3. An instrument according to claim 1, characterized in that the module (13) for monitoring the pressure of the pump (2) is constituted by at least one pressure constriction (33).

4. An instrument according to claim 3, characterized in that the module (13) for monitoring the pressure of the pump (2) is constituted by at least two pressure constrictions (33, 34, 35) in parallel of different capacities, connected upstream via a port selector (36) and interconnected downstream (37).

5. An instrument according to any one of claims 1 to 4, characterized in that the module (13) for monitoring the flow rate and the pressure of the pump (2) is constituted by two or more parallel circuits for monitoring the flow rate, interconnected downstream, and by two or more parallel circuits for monitoring the pressure of the pump (2), said circuits being connected upstream via a pressure sensor and a port selector (36) to the injector (4).

6. An instrument according to claim 1, characterized in that said detector is constituted by a monochromatic illuminator (9) and an optronic cell (11), said monitoring device having a monitoring detector (18) connected to the output of the monochromatic illuminator (9) to be tested via means for conveying the electromagnetic wave.

7. An instrument according to claim 6, including a monochromatic illuminator (9), a measurement vessel (10), and an optronic cell (11), the instrument being characterized in that it further includes a monitoring detector (18) constituted by a monitoring monochromatic illuminator (47) and by an optronic cell (49), the monitoring monochromatic illuminator (47) being connected to the output of the monochromatic illuminator (9) to be tested via means for conveying the electromagnetic wave.

8. An instrument according to claim 7, characterized in that the means for conveying the electromagnetic wave is an optical fiber connected to the monochromatic illuminator (9) to be tested via an adapter.

9. An instrument according to any one of claims 1 to 8, characterized in that the monitoring device comprises a module for monitoring the temperature of the oven (7) and/or a module for monitoring the injector (4), and/or a module for monitoring the data recording system.

10. An instrument according to any one of claims 1 to 9, characterized in that the module (13) for monitoring the flow rate of the pump (2), the module (13) for monitoring the pressure of the pump, the detector (8), optionally the module for monitoring the temperature of the oven (7), and the module for monitoring the injector (4), and the module for monitoring the data recording system are connected to computer means for acquiring and processing data.

11. A method of monitoring the operation of an instrument, in particular a solvent pump (2), according to any one of claims 1 to 10, the method being characterized in that: (a) a reference compound is injected via a circuit of volume $V_1$ of the module (13) for monitoring the flow rate of the pump (2) and the time $t_1$ to detection is monitored, and then the same reference compound is injected via the circuit of volume $V_2$ of the module for monitoring the flow rate of the pump, and the time $t_2$ to detection is measured, and the flow rate of the pump (2) is calculated; in that in a second step (b) the flow from the pump (2) is directed via a pressure constriction circuit of the module for monitoring pressure, and the pressure at the sensor is measured, then the flow rate is modified and the pressure at the sensor is measured again, or optionally, after the first measurement, the flow from the pump (2) is directed in succession via one or more other pressure constrictions of different capacities and the pressure at the sensor is measured again; and in that in a third step (c), when the detector (8) includes a monochromatic illuminator (9), the monochromatic illuminator (9) to be tested is set on a given wavelength, the electromagnetic wave is directed to said monitoring monochromatic illuminator (9) and the response of the optronic cell is verified, optionally by scanning; which steps (a), (b), and (c) can be interverted, and/or steps (a) and (b) can be performed simultaneously and the data acquired by the various measurements can optionally be processed by a computer unit.

12. A method according to claim 11, characterized in that the temperature of the oven (7) is measured and/or the injector (4) is monitored and/or the data recording system is monitored.

13. Means for monitoring the pump, the detector, and optionally the temperature of the oven (7), the data recording system, the injector as described in claims 1 to 10, and designed to be used to implement the method according to claim 11 or 12 or to be used in a high performance liquid chromatography instrument according to any one of claims 1 to 10.

14. A detector for monitoring a monochromatic illuminator constituted by a monitoring monochromatic illuminator having its input connected to the output of the monochromatic illuminator to be tested via an optical fiber, and an adapter, and having its output connected to an optronic cell.

**Patentansprüche**

1. Hochleistungsflüssigkeitschromatographiegerät mit einer Kontrollvorrichtung wobei das Gerät aus folgenden hintereinander geschalteten Mitteln gebildet ist: einer Lösungsmittelpumpe (2), einem Injektor für zu analysierende Proben (4), einer gegebenenfalls in einem thermostabilisierten Ofen (7) angeordneten Chromatographiesäule (6), einer Meßküvette, einem Detektor für die zu identifizierende Komponente oder die zu identifizierenden Komponenten (8), einem Datenaufzeichnungssystem (12), dadurch gekennzeichnet, daß die Kontrollvorrichtung aufweist:

- einen Kontrollmodul (13) für den Durchsatz der Pumpe (2), der einerseits mit einem Injektor (4) und andererseits mit dem Detektor (8) verbunden ist,
- einen Kontrollmodul (13) für den Pumpendruck, der mit der Pumpe über einen Druckfühler verbunden ist,
- wobei die Kontrollmodule (13) mit dem Injektor (4) über eine Wegeauswahlvorrichtung (5) verbunden sind.

2. Gerät nach Anspruch 1, dadurch gekennzeichnet, daß der Kontrollmodul (13) für den Pumpendurchsatz (2) aus wenigstens zwei Parallelkreisen (31, 32) aufgebaut ist, die stromauf über eine Wegeauswahlvorrichtung (36) angeschlossen und stromab verbunden (37) sind, wobei die Kreise unterschiedliche Volumina aufweisen.

3. Gerät nach Anspruch 1, dadurch gekennzeichnet, daß der Kontrollmodul (13) für den Druck der Pumpe (2) durch wenigstens einen Druckbegrenzer (33) gebildet ist.

4. Gerät nach Anspruch 3, dadurch gekennzeichnet, daß der Kontrollmodul (13) für den Druck der Pumpe (2) aus wenigstens zwei parallel geschalteten Druckbegrenzern (33, 34, 35) unterschiedlicher Kapazität gebildet ist, die stromauf über eine Wegeauswahlvorrichtung (36) angeschlossen und stromab miteinander verbunden (37) sind.

5. Gerät nach einem der Ansprüche 1 bis 4, dadurch gekennzeichnet, daß der Kontrollmodul (13) für den Durchsatz und den Druck der Pumpe (2) durch zwei oder mehr parallele Kreise für die Kontrolle des Durchsatzes, die stromab miteinander verbunden sind, und zwei oder mehr parallele Kreise, für die Kontrolle des Drucks der Pumpe (2) gebildet ist, wobei diese Kreise stromauf über einen Druckfühler und eine Wegeauswahlvorrichtung (36) mit dem Injektor (4) verbunden sind.

6. Gerät nach Anspruch 1, dadurch gekennzeichnet, daß der Detektor aus einem Monochromator (9) und einer optoelektronischen Zelle (11) gebildet ist, wobei die Kontrollvorrichtung einen Kontrolldetektor (18) aufweist, der mit dem Ausgang des zu prüfenden Monochromators (9) über eine Leiteinrichtung für elektromagnetische Wellen verbunden ist.

7. Gerät nach Anspruch 6, welches einen Monochromator (9), eine Meßküvette (10) und eine optoelektronische Zelle (11), aufweist, dadurch gekennzeichnet, daß es einen Kontrolldetektor (18) aufweist, der aus einem Kontrollmonochromator (47) und einer optoelektronischen Zelle (49) aufgebaut ist, wobei der Kontrollmonochromator (47) mit dem Ausgang des zu prüfenden Monochromators (9) über eine Leiteinrichtung für elektromagnetische Wellen verbunden ist.

8. Gerät nach Anspruch 7, dadurch gekennzeichnet, daß die Leiteinrichtung für elektromagnetische Wellen eine mit dem zu prüfenden Monochromator (9) über einen Adapter verbundene Faseroptik ist.

9. Gerät nach einem der Ansprüche 1 bis 8, dadurch gekennzeichnet, daß die Kontrollvorrichtung einen Kontrollmodul für die Temperatur des Ofens (7) und/oder einen Kontrollmodul für den Injektor (4) und/oder einen Kontrollmodul für das Datenaufzeichnungssystem aufweist.

10. Gerät nach einem der Ansprüche 1 bis 9, dadurch gekennzeichnet, daß der Kontrollmodul (13) für den Durchsatz der Pumpe (2), der Kontrollmodul (13) für den Druck der Pumpe, der Detektor (8), gegebenenfalls der Kontrollmodul für die Temperatur des Ofens (7), und der Kontrollmodul für den Injektor (4) und der Kontrollmodul für das Datenaufzeichnungssystem mit einer Datenerfassungs- und -verarbeitungseinrichtung verbunden sind.

**11.** Verfahren zur Funktionskontrolle eines Geräts, insbesondere der Lösungsmittelpumpe (9) nach einem der Ansprüche 1 bis 10, dadurch gekennzeichnet, daß in einen Kreis mit Volumen V1 des Kontrollmoduls (13) für den Durchsatz der Pumpe (2) eine Probenzusammensetzung eingegeben und die Zeit t1 bis zum Nachweis gemessen wird, dann in den Kreis mit Volumen V2 des Kontrollmoduls für den Durchsatz der Pumpe die gleiche Probenzusammensetzung eingegeben und die Zeit t2 bis zum Nachweis gemessen wird, und der Durchsatz der Pumpe (2) berechnet wird, und daß in einem zweiten Schritt (b) der Strom der Pumpe (2) zu einem Druckbegrenzerkreis des Kontrollmoduls für den Druck gerichtet und der Druck am Meßfühler gemessen wird, dann der Durchsatz verändert und erneut der Druck am Meßfühler gemessen wird, oder gegebenenfalls nach der ersten Messung der Strom der Pumpe (2) aufeinanderfolgend zu einem oder mehreren weiteren Druckbegrenzern unterschiedlicher Kapazität gerichtet und erneut der Druck am Meßfühler gemessen wird, und daß in einem dritten Schritt (c), wenn der Detektor (8) einen Monochromator (9) aufweist, der zu prüfende Monochromator (9) auf eine gegebene Wellenlänge fixiert wird, die elektromagnetische Welle zum Kontrollmonochromator (9) gerichtet wird und gegebenenfalls durch Abfragen die Antwort der optoelektronischen Zelle verifiziert wird, wobei die Schritte (a), (b), (c) umgekehrt werden können und/oder die Schritte (a) und (b) gleichzeitig bewirkt und die durch die verschiedenen Messungen gewonnenen Daten gegebenenfalls durch eine Datenverarbeitungseinheit verarbeitet werden können.

**12.** Verfahren nach Anspruch 11, dadurch gekennzeichnet, daß die Temperatur des Ofens (7) gemessen und/oder der Injektor (4) kontrolliert wird und/oder das Datenaufzeichnungssystem kontrolliert wird.

**13.** Mittel zur Kontrolle der Pumpe, des gegegebenfalls vorhandenen Detektors für die Temperatur des Ofens (7), des Datenaufzeichnungssystems, des Injektors, wie in den Ansprüchen 1 bis 10 beschrieben, bestimmt zur Durchführung des Verfahrens nach einem der Ansprüche 11 oder 12 oder zur Verwendung in einem Hochleistungsflüssigkeitschromatographiegerät nach einem der Ansprüche 1 bis 10.

**14.** Kontrolldetektor für einen Monochromator, der aus einem Kontrollmonochromator gebildet ist, der an seinem Eingang mit dem Ausgang des zu prüfenden Monochromators über eine Faseroptik und einen Adapter und an seinem Ausgang mit einer optoelektronischen Zelle verbunden ist.

FIG_1

FIG_2

FIG_3

FIG_4

50

51

54

52

53

55

Fig 5

52

54

53

55

Fig 6

56

60

58

59

57

Fig 7